# EUROPEAN PATENT SPECIFICATION

(11) **EP 3 570 071 B1**
(45) Date of publication and mention of the grant of the patent: **02.10.2024**
(21) Application number: 19174516.5
(22) Date of filing: 14.05.2019
(51) Int. Cl.: G01S 15/96, A01K 61/95, G01S 7/539, G01S 15/86

(54) **FISH SPECIES ESTIMATING SYSTEM, AND METHOD OF ESTIMATING FISH SPECIES**
SYSTEM UND VERFAHREN ZUR SCHÄTZUNG VON FISCHARTEN
SYSTÈME ET PROCÉDÉ D'ESTIMATION D'ESPÈCES DE POISSON

(30) Priority: 18.05.2018 JP 2018096081
(43) Date of publication of application: 20.11.2019
(73) Proprietor: Furuno Electric Co., Ltd., Nishinomiya-City, Hyogo 662-8580 (JP)
(72) Inventor: SATO, Sadao, Nishinomiya-City, Hyogo 662-8580 (JP); MATSUMOTO, Daisuke, Nishinomiya-City, Hyogo 662-8580 (JP); SATOH, Koya, Nishinomiya-City, Hyogo 662-8580 (JP)
(74) Representative: Müller Hoffmann & Partner

(56) References cited:
- GB-A- 2 522 302
- PATRICK P H ET AL: "The potential of a neural network based sonar system in classifying fish", NEURAL NETWORKS FOR OCEAN ENGINEERING, 1991., IEEE CONFERENCE ON WASHINGTON, DC, USA 15-17 AUG. 1991, NEW YORK, NY, USA,IEEE, US, 15 August 1991 (1991-08-15), pages 207 - 213, XP010053583, ISBN: 978-0-7803-0205-1, DOI: 10.1109/ICNN.1991.163352
- HIRAMA YUDAI ET AL: "Discriminating fish species by an Echo sounder in a set-net using a CNN", 2017 21ST ASIA PACIFIC SYMPOSIUM ON INTELLIGENT AND EVOLUTIONARY SYSTEMS (IES), IEEE, 15 November 2017 (2017-11-15), pages 112 - 115, XP033282156, DOI: 10.1109/IESYS.2017.8233571
- ROBERTS P L D ET AL: "Multiview, Broadband Acoustic Classification of Marine Fish: A Machine Learning Framework and Comparative Analysis", IEEE JOURNAL OF OCEANIC ENGINEERING, IEEE SERVICE CENTER, PISCATAWAY, NJ, US, vol. 36, no. 1, 1 January 2011 (2011-01-01), pages 90 - 104, XP011479046, ISSN: 0364-9059, DOI: 10.1109/JOE.2010.2101235
- QIN HONGWEI ET AL: "DeepFish: Accurate underwater live fish recognition with a deep architecture", NEUROCOMPUTING, ELSEVIER, AMSTERDAM, NL, vol. 187, 2 December 2015 (2015-12-02), pages 49 - 58, XP029484730, ISSN: 0925-2312, DOI: 10.1016/J.NEUCOM.2015.10.122

## Description

### Technical Field

The present disclosure relates to fish species estimating system, a method of estimating fish species, and a program.

### Background

JP2014-077703A discloses a method of distinguishing fish species using an echo signal of an ultrasonic wave transmitted underwater. Further technological background can be found in PATRICK P. H. et al: "The potential of a neural network based sonar system in classifying fish", Neural Networks for Ocean Engineering, 1991, IEEE Conference on Washington, DC, USA 15-17 August 1991, New York, NY, USA, IEEE, US, 15 August 1991, pages 207-213.

Since the management of a fish catch has been increasingly strict in the field of fishing every year, a further improvement in accuracy of the technology of estimating the fish species before catching is demanded.

### Summary

The purpose of the present disclosure is to provide a fish species estimating system, a method of estimating fish species, and a program, which can improve accuracy of a fish species estimation. According to the claimed subject-matter, a fish species estimating system according to claim 1, a method of estimating a fish species according to claim 6 and a fish species estimating program according to claim 7 are presented.

According to one aspect of the present disclosure, a fish species estimating system includes an acquiring module and a reasoning module. The acquiring module acquires a data set at least including echo data generated from a reflected wave of an ultrasonic wave emitted underwater. The reasoning module estimates a fish species of a fish image included in the echo data of the data set acquired by the acquiring module, by using a learned model created by machine learning where the data set is used as input data and the fish species is used as teacher data.

According to another aspect of the present disclosure, a method of estimating a fish species includes acquiring a data set at least including echo data generated from a reflected wave of an ultrasonic wave emitted underwater, and estimating a fish species of a fish image included in the echo data of the acquired data set, by using a learned model created by machine learning where the data set is used as input data and the fish species is used as teacher data.

According to still another aspect of the present disclosure, a program causes a computer to acquire a data set at least including echo data generated from a reflected wave of an ultrasonic wave emitted underwater, and estimate a fish species of a fish image included in the echo data of the acquired data set, by using a learned model created by machine learning where the data set is used as input data and the fish species is used as teacher data.

### Effect

According to the present disclosure, it is possible to improve accuracy of a fish species estimation.

### Brief Description of Drawings

The present disclosure is illustrated by way of example and not by way of limitation in the figures of the accompanying drawings, in which like reference numerals indicate like elements and in which:
Fig. 1 is a block diagram illustrating one example of a configuration of a fish species estimating system according to one embodiment;
Fig. 2 is a view illustrating one example of an echo image;
Fig. 3 is a block diagram illustrating a learning phase of a school-of-fish learning/reasoning module;
Fig. 4 is a flowchart illustrating one example of a procedure of the learning phase of the school-of-fish learning/reasoning module;
Fig. 5 is a block diagram illustrating a reasoning phase of the school-of-fish learning/reasoning module;
Fig. 6 is a flowchart illustrating one example of a procedure of the reasoning phase of the school-of-fish learning/reasoning module;
Fig. 7 is a view illustrating one example of a detected fish species database;
Fig. 8 is a block diagram illustrating one example of a configuration of a fish finder;
Fig. 9 is a flowchart illustrating one example of a procedure of a display control;
Fig. 10 is a view illustrating one example of a mark table;
Fig. 11 is a view illustrating one example of an echo image to which a mark is added;
Fig. 12 is a view illustrating another example of the echo image to which the mark is added;
Fig. 13 is a view illustrating one example of a nautical chart image to which the mark is added; and
Fig. 14 is a flowchart illustrating one example of a procedure of a fish species notification.

### Detailed Description

Hereinafter, one embodiment of the present disclosure will be described with reference to the accompanying drawings. Note that the following embodiment illustrates a method and device for implementing the technical idea of the present disclosure, and the technical idea of the present disclosure is not intended to be limited to the following method and device. The technical idea of the present disclosure may be variously changed or modified within the technical scope of the present disclosure which is defined in the appended claims.

### [System Configuration]

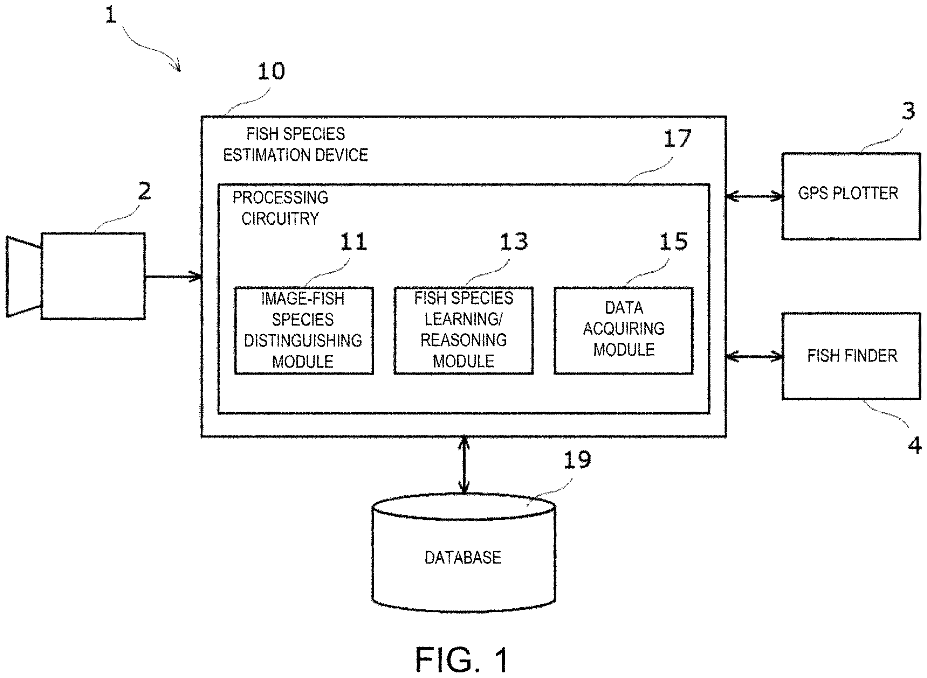

Fig. 1 is a block diagram illustrating one example of a configuration of a fish species estimating system 1 according to one embodiment. The fish species estimating system 1 may include a fish species estimation device 10, a camera 2, a GPS plotter 3, a fish finder 4, and a database 19.

The fish species estimation device 10, the camera 2, the GPS plotter 3, the fish finder 4, and the database 19 included in the fish species estimating system 1 are mounted, for example, on a ship, such as a fishing boat. Without limiting to this configuration a part or all of functions of the fish species estimation device 10 may be realized by a server device installed on the land, for example.

The fish species estimation device 10 may be a computer provided with a processing circuitry 17 including a CPU, a RAM, a ROM, a nonvolatile memory, and an input/output interface. The processing circuitry 17 includes an image-fish species distinguishing module 11, a fish species learning/reasoning module 13, and a data acquiring module 15. These functional modules may be realized by the CPU of the processing circuitry 17 executing information processing according to a program loaded to the RAM from the ROM or the nonvolatile memory. The program may be provided, for example, through an information storage medium, such as an optical disc or a memory card, or may be provided, for example, through a communication network, such as the Internet.

The fish species estimation device 10 may be accessible to the database 19. The database 19 may be realized in the fish species estimation device 10, or may be realized in the GPS plotter 3 or the fish finder 4, or may be realized in the server device installed on the land, etc.

The camera 2 may image fish when or after it is caught to generate image data. For example, the camera 2 may image fish caught in a net when the net is raised, or may image fish raised on the deck, or may image fish put in a fish tank, or may image fish which is landed. The image data generated by the camera 2 is outputted to the fish species estimation device 10, and it is used for a learning phase of the fish species learning/reasoning module 13 via the image-fish species distinguishing module 11, as will be described later.

The GPS plotter 3 may generate position data indicative of the current position of the ship based on electric waves received from the GPS (Global Positioning System) and plots the current position of the ship on a nautical chart image displayed on a display unit (not illustrated). The position data generated by the GPS plotter 3 may be outputted to the fish species estimation device 10, and it may be used for the learning phase and a reasoning phase of the fish species learning/reasoning module 13, as will be described later.

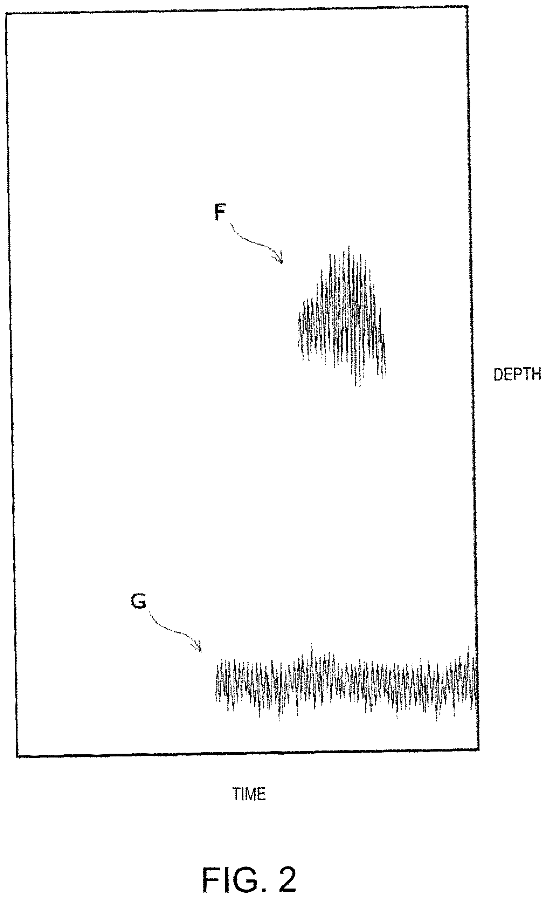

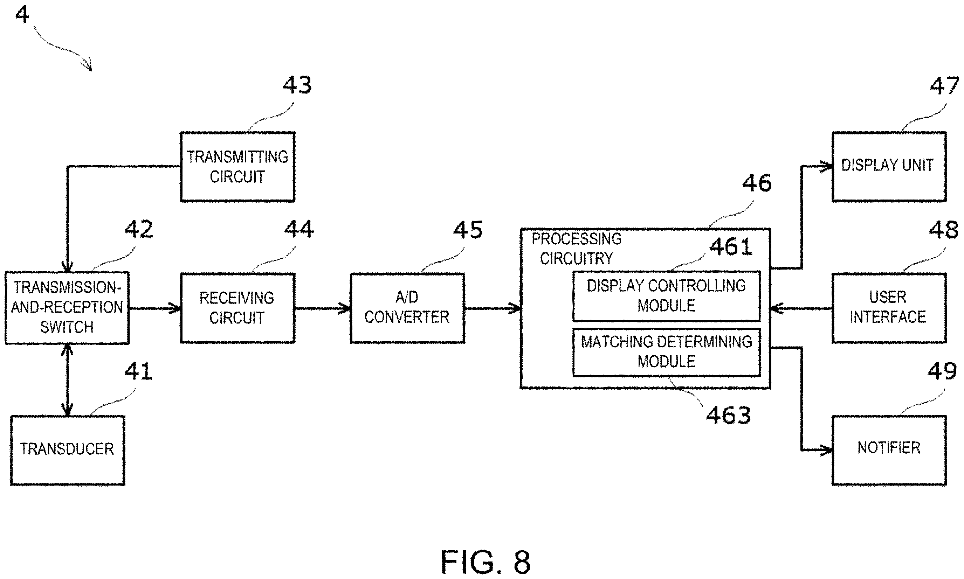

The fish finder 4 may generate echo data from a reflected wave of an ultrasonic wave emitted underwater, and display an echo image based on the echo data on a display unit 47 (refer to Fig. 8). The concrete configuration of the fish finder 4 will be described later. As illustrated in the example of Fig. 2, the echo image may include a fish image F indicative of a component reflected on underwater fish, and a waterbed or seabed image G indicative of a component reflected on the waterbed or seabed.

Further, the fish finder 4 may detect water depth data based on the echo data and detects water temperature data by a temperature sensor. The echo data, the water depth data, and the water temperature data which are generated by the fish finder 4 may be outputted to the fish species estimation device 10, and they may be used for the learning phase and the reasoning phase of the fish species learning/reasoning module 13, as will be described later.

The image data from the camera 2, the position data from the GPS plotter 3, the echo data, the water depth data, the water temperature data from the fish finder 4, etc. are acquired by the data acquiring module 15, and they may be stored in the database 19.

Among these, a data set including the echo data, the position data, the water depth data, and the water temperature data may be used as input data of the fish species learning/reasoning module 13. The data set may be stored at every given time. The data set may at least include the echo data, and one or more of the position data, the water depth data and the water temperature data may be omitted, or the data set may further include other data, such as time and/or day data, and tidal current data.

The image data is used as input data of the image-fish species distinguishing module 11. The image data may be stored so as to be associated with the data set acquired before catching fish. Specifically, the image data may be associated with the data set so that fish imaged by the camera 2 matches with fish detected by the echo data. For example, they may be associated with each other automatically in consideration of the time required for catching the fish, or may be associated with each other, or manually by a user.

For example, the position when the fish finder 4 detects a school of fish may be stored, and the image data and the data set may be associated with each other, when satisfying a condition that a distance between the position when the school of fish (signs of fish) is detected and the position when the school of fish is caught (i.e., the position where the image data is generated) is below a threshold. A condition that a difference between the time at which the school of fish is detected and the time at which the school of fish is caught is below a threshold may be further combined with the condition described above. The position at which the school of fish is caught is, for example, the position of the ship when the fish is caught if it is fishing with a fishing pole, and the starting position of hauling a net or the center position of the net, if it is fishing with a round haul net.

The image-fish species distinguishing module 11 is one example of a distinguishing module. When the image data is inputted, the image-fish species distinguishing module 11 may distinguish a fish species of a fish image included in the image data, and output it. The fish species outputted from the image-fish species distinguishing module 11 is used as a teacher data in the learning phase of the fish species learning/reasoning module 13, as will be described later. The fish species may be distinguished beforehand and stored in the database 19 so as to be associated with the data set as well as the image data, or may be distinguished during the learning phase of the fish species learning/reasoning module 13 and directly inputted into the fish species learning/reasoning module 13.

In this embodiment, the image-fish species distinguishing module 11 may be a learning/reasoning module which realizes a learning phase and a reasoning phase by machine learning, similar to the fish species learning/reasoning module 13. Specifically, the image-fish species distinguishing module 11 may create a learned model by the machine learning in the learning phase, using the image data as input data and the fish species as the teacher data. The fish species as the teacher data is inputted, for example, by the user. Moreover, the image-fish species distinguishing module 11 uses the learned model created in the learning phase, estimate in a reasoning phase the fish species of the fish image included in the image data by using the image data as the input data, and output the fish species.

Without limiting to the configuration described above, the image-fish species distinguishing module 11 may omit the part which realizes the learning phase and may only be comprised of the part which realizes the reasoning phase.

The fish species learning/reasoning module 13 is one example of the learning module and the reasoning module, and may realize the learning phase and the reasoning phase by the machine learning. Specifically, the fish species learning/reasoning module 13 creates in the learning phase the learned model by the machine learning by using the data set including the echo data etc. as the input data, and the fish species distinguished by the image-fish species distinguishing module 11 as the teacher data. Moreover, the fish species learning/reasoning module 13 uses the learned model created in the learning phase, estimates in the reasoning phase the fish species of the fish image included in the echo data by using the data set including the echo data etc. as the input data, and outputs the fish species.

The machine learning may use, for example, a neural network. Particularly, deep learning using a deep neural network where multiple layers of neurons are combined may be suitable. Without limiting to the configuration described above, machine learning other than the neural network, such as a support vector machine, a decision tree, etc. may be used.

Note that, since the part which realizes the learning phase in the image-fish species distinguishing module 11 and the fish species learning/reasoning module 13 requires a high calculation throughput, it may be realized by a server device installed on the land, etc. In such a case, data may be communicated sequentially using satellite communication etc., or data may be stored while the ship is traveling and the data may be communicated all at once when the ship returns to a port.

### [Learning Phase]

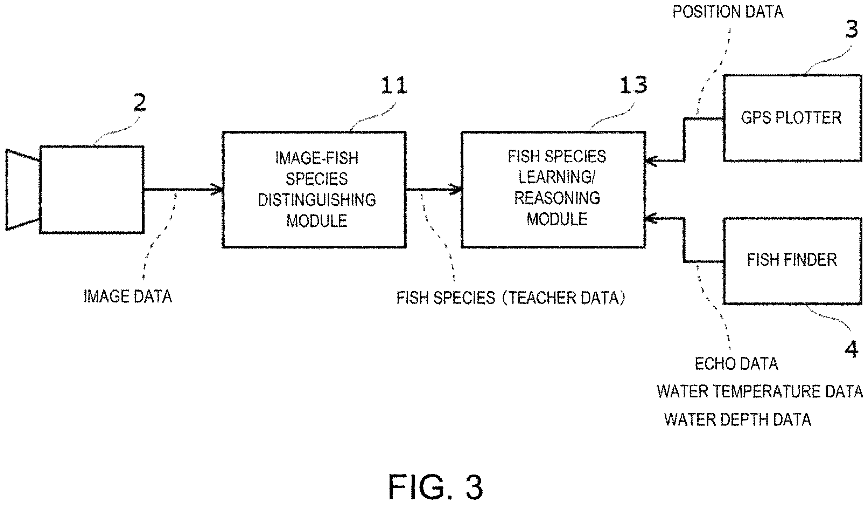

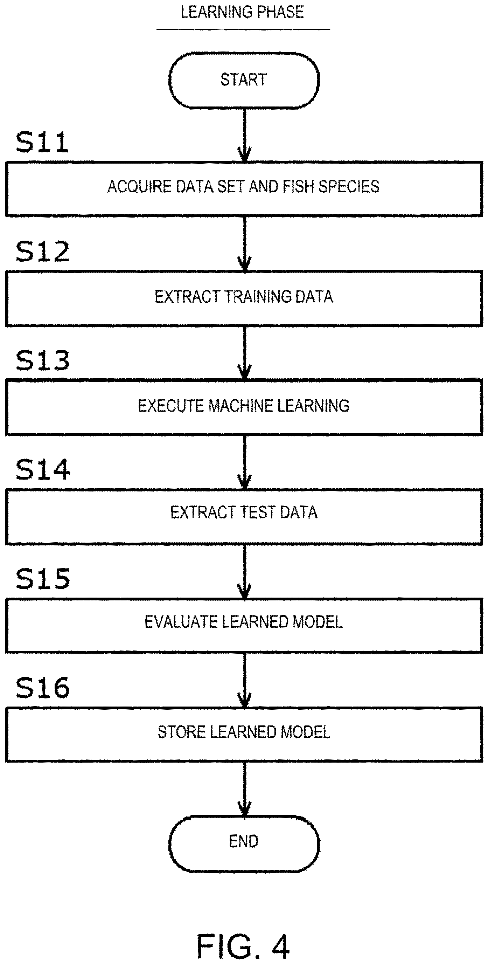

Fig. 3 is a block diagram illustrating the learning phase of the fish species learning/reasoning module 13. Fig. 4 is a flowchart illustrating one example of a procedure of the learning phase of the fish species learning/reasoning module 13.

First, the fish species learning/reasoning module 13 acquires the data set and the fish species (S11). In the learning phase, the data set and the fish species associated with the data set may be read from the database 19. The data set includes the position data from the GPS plotter 3, and the echo data, the water depth data, and the water temperature data from the fish finder 4, etc. The fish species is distinguished by the image-fish species distinguishing module 11 based on the image data from the camera 2. The fish species may be read from the database 19 or may be directly inputted from the image-fish species distinguishing module 11.

Note that, although arrows indicate a flow of the data in Fig. 3 for convenience of explanation, each data may be, in fact, stored in the database 19 and read from the database 19. Without limiting to this configuration, each data may be directly inputted and outputted, without the intervening database 19.

Next, the fish species learning/reasoning module 13 extracts a part of a plurality of groups of data sets and fish species, as training data for the machine learning (S12), and execute the machine learning using the extracted training data (S13). The machine learning is performed using the data set as the input data and the fish species as the teacher data. Thus, the learned model for estimating the fish species of the fish image included in the echo data is created.

Next, the fish species learning/reasoning module 13 may extract a part different from the training data from the plurality of groups of the data set and the fish species, as test data (S14), and evaluate the learned model using the extracted test data (S15). Then, the fish species learning/reasoning module 13 may store in the database 19 the learned model(s) for which the evaluation is satisfactory (S16), and then end the learning phase.

### [Reasoning Phase]

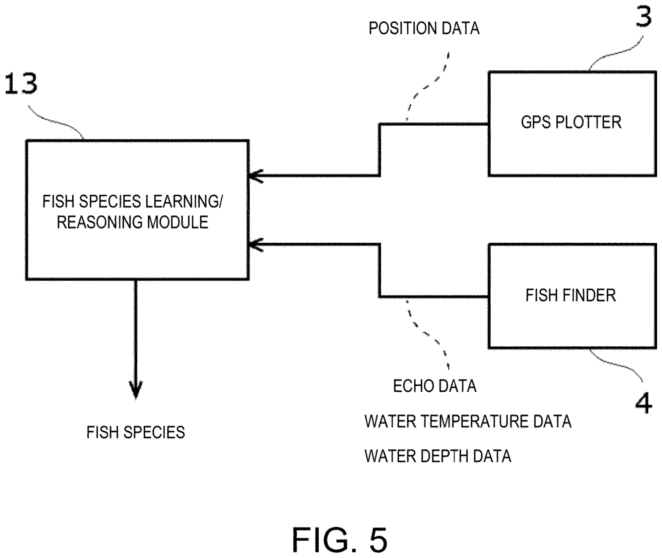

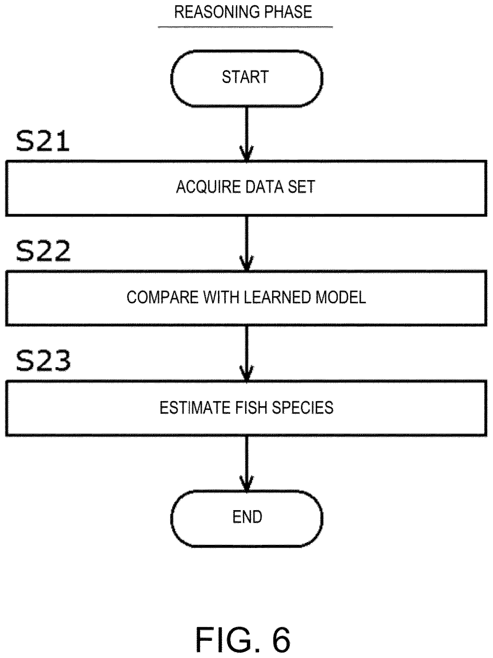

Fig. 5 is a block diagram illustrating the reasoning phase of the fish species learning/reasoning module 13. Fig. 6 is a flowchart illustrating one example of a procedure of the reasoning phase of the fish species learning/reasoning module 13.

First, the fish species learning/reasoning module 13 acquires a data set (S21, processing as an acquiring module). In the reasoning phase, the echo data, the position data, the water depth data, the water temperature data, etc. which are included in the data set may be directly inputted into the fish species learning/reasoning module 13 from the GPS plotter 3 and the fish finder 4. Without limiting to this configuration, the data set may once be stored in the database 19, and may be read from the database 19.

Next, the fish species learning/reasoning module 13 uses the data set including the acquired echo data as the input data, compare the input data with the learned model created in the learning phase (S22), and estimate and output the fish species of the fish image included in the echo data (S23). The comparison with the learned model may be, for example, pattern matching of the echo image based on the echo data with the learned model image. The fish species estimated by the fish species learning/reasoning module 13 may be outputted to the database 19, the GPS plotter 3, and the fish finder 4, etc.

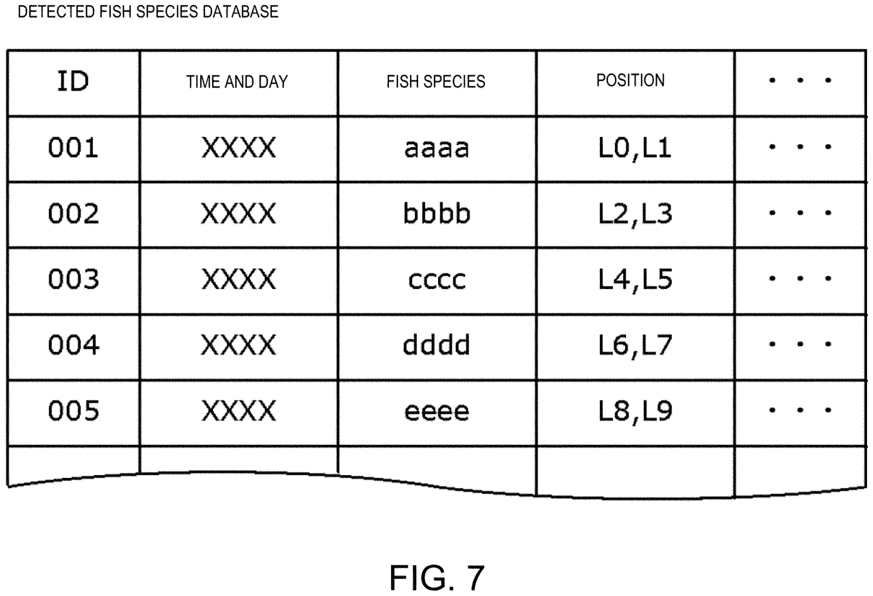

As illustrated in Fig. 7, the fish species outputted from the fish species learning/reasoning module 13 is, for example, stored in a detected fish species database included in the database 19 so as to be associated with the time and/or day data, the position data, etc. Further, the fish species may be, for example, associated with the data, such as the water depth data, the water temperature data, the current data, etc.

According to the above embodiment, it is possible to improve the accuracy of the fish species estimation by using the learned model created by the machine learning and estimating the fish species of the fish image included in the echo data. Moreover, it is possible to further improve the accuracy of the fish species estimation by repeating the machine learning using the data set and the fish species which are acquired each time fish is caught.

Moreover, according to the above embodiment, since the fish species distinguished by the image-fish species distinguishing module 11 based on the image data is used as the teacher data in the learning phase of the fish species learning/reasoning module 13, it becomes possible to omit the user's burden for inputting the fish species, thereby improving the accuracy of the fish species estimation, while reducing the user's burden.

Note that, although in the above embodiment only the fish species is treated as the property to be distinguished and estimated, the fish species and fish quantity may be used as the properties to be distinguished by the image-fish species distinguishing module 11, as the teacher data in the learning phase of the fish species learning/reasoning module 13, and as the property to be estimated in the reasoning phase of the fish species learning/reasoning module 13. According to this configuration, since the fish quantity is estimated as well as the fish species, these are further useful for determination of the fish catch.

### [Fish Finder]

Fig. 8 is a block diagram illustrating one example of a configuration of the fish finder 4. The fish finder 4 may include a transducer 41, a transmission-and-reception switch 42, a transmitting circuit 43, a receiving circuit 44, an A/D converter 45, a processing circuitry 46, a display unit 47, a user interface 48, and a notifier 49 (notifying module). The processing circuitry 46 may include a display controlling module 461 and a matching determining module 463.

The transducer 41 may include an ultrasonic transducer and may be installed in the bottom of the ship. The transducer 41 may convert an electrical signal from the transmitting circuit 43 into an ultrasonic wave and transmit the ultrasonic wave underwater, and convert a received reflected wave into an electrical signal and output the electrical signal to the receiving circuit 44. The transmission-and-reception switch 42 may connect the transmitting circuit 43 to the transducer 41 upon the transmission, and connect the receiving circuit 44 to the transducer 41 upon reception.

The receiving circuit 44 may amplify the electrical signal from the transducer 41, and output it to the A/D converter 45. The A/D converter 45 may convert the electrical signal from the receiving circuit 44 into digital data (i.e., echo data), and output it to the processing circuitry 46.

The processing circuitry 46 may be a computer including a CPU, a RAM, a ROM, a nonvolatile memory, and an input/output interface. The functional parts included in the processing circuitry 46 may be realized by the CPU executing information processing according to a program loaded to the RAM from the ROM or the nonvolatile memory. The program may be provided, for example, through information storage medium, such as an optical disc or a memory card, or may be provided, for example, through a communication network, such as the Internet.

The display unit 47 is, for example, a liquid crystal display. The user interface 48 is, for example, a button switch or a touch panel. The notifier 49 is, for example, a speaker or a buzzer.

### [Display Control]

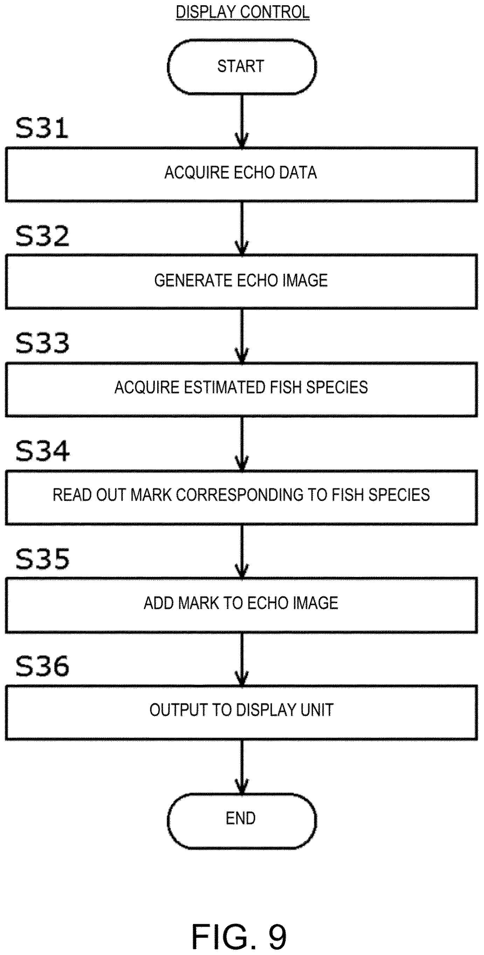

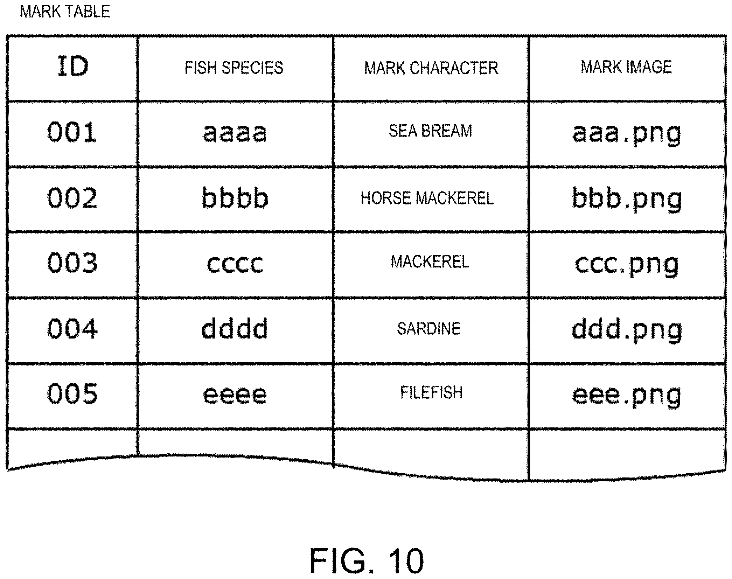

Fig. 9 is a flowchart illustrating one example of a procedure of a display control executed by the processing circuitry 46, in order to realize the display controlling module 461. Fig. 10 is a view illustrating one example of a mark table which is referred when executing the display control.

The processing circuitry 46 may first acquire the echo data from the A/D converter 45 (S31), and then generate the echo image based on the acquired echo data (S32). As illustrated in the example of Fig. 2, the echo image may include the fish image F and the waterbed image G.

Next, the processing circuitry 46 may acquire the estimated fish species from the fish species estimation device 10 (S33).

Next, the processing circuitry 46 may refer to the mark table and read out a mark corresponding to the acquired fish species (S34). As illustrated in the example of Fig. 10, in the mark table, mark characters and a mark image which constitute each mark may be associated with the corresponding fish species. A character string indicative of a fish species is included in a column of the mark characters, and a file name of an image may be included in a column of the mark image. The mark table may be stored in the memory of the processing circuitry 46, or may be stored in the database 19.

Next, the processing circuitry 46 may add the read-out mark to the echo image (S35), and output the echo image attached with the mark to the display unit 47 (S36). Thus, the echo image with the mark may be displayed on the display unit 47.

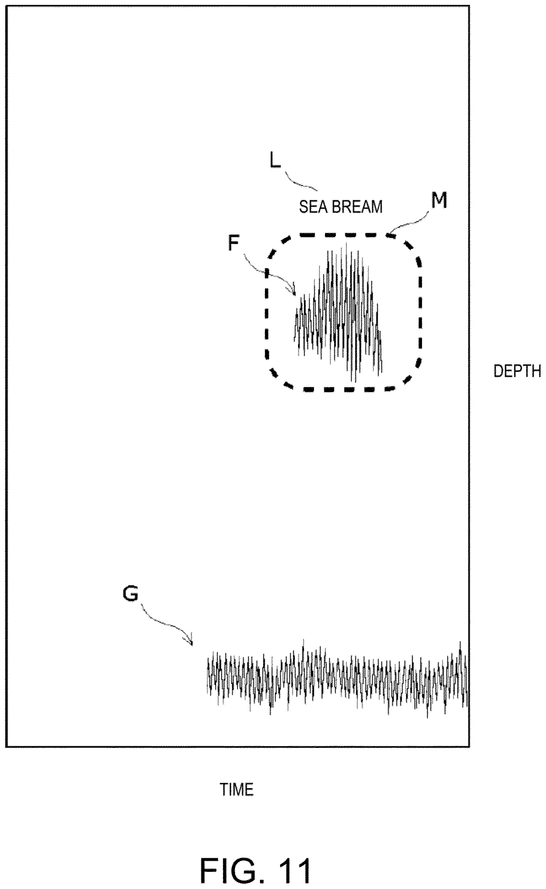

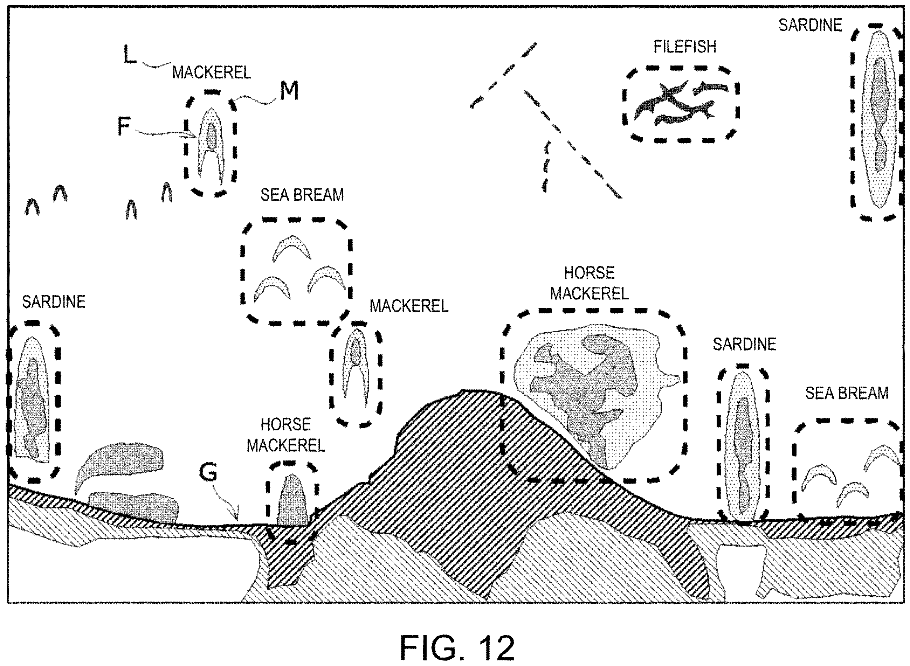

As illustrated in the example of Fig. 11, over the echo image, the mark image M and the mark characters L may be added so as to be associated with the fish image F. In the illustrated example, the mark image M may be an image of an enclosing line, and it may be disposed so that the enclosing line encloses the fish image F. The mark characters L may be disposed near the mark image M. The example of Fig. 12 is an echo image illustrating a larger area than that of Fig. 11. Like this case, when the echo image includes a plurality of fish images F, the mark image M and the mark characters L may be added to each fish image F. The mark image M may be desirable to be in a different color and have a different shape for every fish species in order to facilitate the discrimination.

As described above, since the echo image to which the marks are added is displayed on the display unit 47, the user is able to recognize the fish species of the fish image included in the echo image. Note that, although in this embodiment the fish species estimated by the fish species estimation device 10 is used, the fish species distinguished by the conventional technique disclosed in JP2014-077703A etc. may be used for the addition of marks.

Moreover, the addition of the mark may be performed only for the fish species specified by the user operating the user interface 48. Therefore, it may become easier for the user to recognize a desired fish species. Similarly, the registration to the detected fish species database (refer to Fig. 7) described above may also be performed only when the user operates the user interface 48. Therefore, the user can save the detected fish species after checking the mark displayed on the display unit 47.

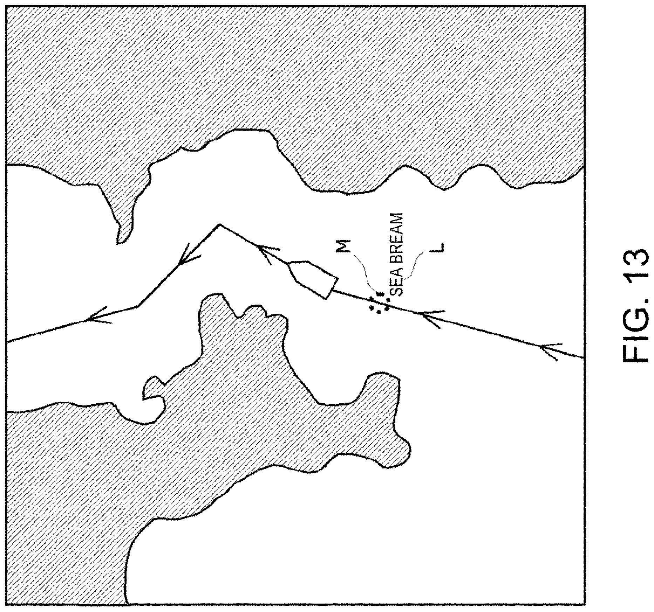

Note that, although in this embodiment one example in which the mark is added to the echo image displayed on the display unit 47 of the fish finder 4 is described, the adding of the mark is not limited to on the display unit 47. For example, as illustrated in the example of Fig. 13, the mark of the mark image M and the mark character L may be added to the nautical chart image displayed on the display unit (not illustrated) of the GPS plotter 3, based on the fish species and the position data which are registered to the detected fish species database (refer to Fig. 7).

### [Fish Species Notification]

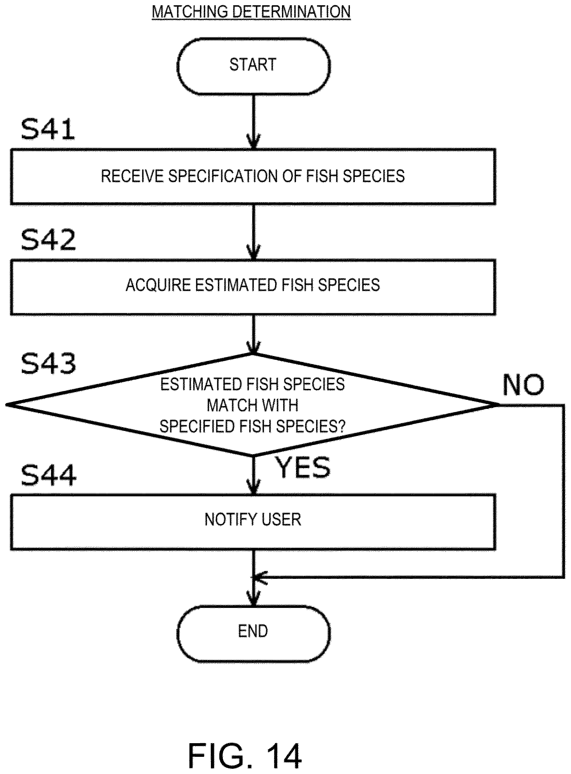

Fig. 14 is a flowchart illustrating one example of a procedure of a fish species notification executed by the processing circuitry 46, in order to realize the matching determining module 463. The processing circuitry 46 may first receive a specification of a fish species from the user (S41). The specification of the fish species is performed by the user operating the user interface 48. Next, the processing circuitry 46 may acquire the fish species estimated from the fish species estimation device 10 (S42).

Next, the processing circuitry 46 may determine whether the estimated fish species matches with the fish species specified by the user (S43). If matched (S43: YES), the processing circuitry 46 may drive the notifier 49 to notify the user that the specified fish species has appeared (S44). The notification may be performed by, for example, voice from the speaker or buzzer.

By performing the notification, it becomes possible for the user to recognize that the specified fish species has appeared.

## Claims

1. A fish species estimating system (1), comprising:
an acquiring module (15) configured to acquire a data set at least including position data and echo data generated from a reflected wave of an ultrasonic wave emitted underwater; and
a reasoning module (13) configured to estimate a fish species of a fish image included in the echo data of the data set acquired by the acquiring module (15), by using a learned model created by machine learning where the data set is used as input data and the fish species is used as teacher data,
**characterized in that** the fish species estimating system (1) further comprises
a distinguishing module (11) configured to distinguish the fish species of the fish image included in image data generated by a camera configured to image fish caught; and
a learning module (13) configured to create the learned model by using the fish species distinguished by the distinguishing module (11) as teacher data,
wherein the distinguishing module (11) distinguishes the fish species of the fish image included in the image data by using a further learned model created by machine learning where the image data is used as input data and the fish species is used as teacher data, and
wherein the acquiring module (15) associates the image data with the data set, when a distance between a position when signs of fish are detected based on the echo data and a position where the image data is generated is below a threshold.

2. The fish species estimating system (1) of claim 1, wherein the data set further includes one or more data selected from water temperature data, and water depth data.

3. The fish species estimating system (1) of claim 1 or 2, wherein the learned models are created using the fish species and a fish quantity as teacher data, and
wherein the reasoning module (13) estimates the fish species and the fish quantity of the fish image included in the echo data.

4. The fish species estimating system (1) of any one of claim 1 to 3, further comprising a display controlling module (461) configured to display an echo image based on the echo data,
wherein the display controlling module (461) adds a mark indicative of the fish species estimated by the reasoning module (13) to the echo image, so as to be associated with the fish image included in the echo image.

5. The fish species estimating system (1) of any one of claim 1 to 4, further comprising a notifying module (49) configured to, when the fish species estimated by the reasoning module (13) matches with a prespecified fish species, notify a user about the fish species.

6. A method of estimating a fish species, comprising:
acquiring a data set at least including position data and echo data generated from a reflected wave of an ultrasonic wave emitted underwater; and
estimating a fish species of a fish image included in the echo data of the acquired data set, by using a learned model created by machine learning where the data set is used as input data and the fish species is used as teacher data,
**characterized in that** the method of estimating a fish species further comprises
distinguishing the fish species of the fish image included in image data generated by a camera configured to image fish caught;
creating the learned model by using the fish species distinguished as teacher data; and
associating the image data with the data set, when a distance between a position when signs of fish are detected based on the echo data and a position where the image data is generated is below a threshold,
wherein the fish species of the fish image included in the image data is distinguished by using a further learned model created by machine learning where the image data is used as input data and the fish species is used as teacher data.

7. A fish species estimating program by which a computer is caused to function as
an acquiring module (15) configured to acquire a data set at least including position data and echo data generated from a reflected wave of an ultrasonic wave emitted underwater;
a reasoning module (13) configured to estimate a fish species of a fish image included in the echo data of the data set acquired by the acquiring module (15), by using a learned model created by machine learning where the data set is used as input data and the fish species is used as teacher data,
a distinguishing module (11) configured to distinguish the fish species of the fish image included in image data generated by a camera configured to image fish caught; and
a learning module (13) configured to create the learned model by using the fish species distinguished by the distinguishing module (11) as teacher data,
wherein the distinguishing module (11) distinguishes the fish species of the fish image included in the image data by using a further learned model created by machine learning where the image data is used as input data and the fish species is used as teacher data, and
wherein the acquiring module (15) associates the image data with the data set, when a distance between a position when signs of fish are detected based on the echo data and a position where the image data is generated is below a threshold.

## Patentansprüche

1. System (1) zum Schätzen einer Fischart, aufweisend:
ein Erfassungsmodul (15), das dafür konfiguriert ist, einen Datensatz zu erfassen, der zumindest Positionsdaten und Echodaten enthält, die aus einer reflektierten Welle einer unter Wasser emittierten Ultraschallwelle erzeugt werden; und
ein Schlussfolgerungsmodul (13), das dafür konfiguriert ist, eine Fischart eines Fischbildes zu schätzen, das in den Echodaten des mittels des Erfassungsmoduls (15) erfassten Datensatzes enthalten ist, indem ein gelerntes Modell verwendet wird, das durch maschinelles Lernen erzeugt wurde, wobei der Datensatz als Eingabedaten genutzt wird und die Fischart als Lehrerdaten genutzt wird,
**dadurch gekennzeichnet, dass** das System (1) zum Schätzen einer Fischart ferner aufweist:
ein Unterscheidungsmodul (11), das dafür konfiguriert ist, die Fischart des Fischbildes zu unterscheiden, das in Bilddaten enthalten ist, die mittels einer Kamera erzeugt werden, die dafür konfiguriert ist, einen Fischfang abzubilden; und
ein Lernmodul (13), das dafür konfiguriert ist, das gelernte Modell zu erzeugen, indem die mittels des Unterscheidungsmoduls (11) unterschiedenen Fischarten als Lehrerdaten verwendet werden,
wobei das Unterscheidungsmodul (11) die Fischart des Fischbildes, das in den Bilddaten enthalten ist, unterscheidet, indem ein weiteres gelerntes Modell, das durch maschinelles Lernen gelernt wurde, verwendet wird, wobei die Bilddaten als Eingabedaten genutzt werden und die Fischart als Lehrerdaten genutzt wird, und
wobei das Erfassungsmodul (15) die Bilddaten mit dem Datensatz assoziiert, wenn ein Abstand zwischen einer Position, wenn Zeichen eines Fisches basierend auf den Echodaten detektiert werden, und einer Position, bei der die Bilddaten erzeugt werden, unterhalb eines Schwellenwerts liegt.

2. System (1) zum Schätzen einer Fischart nach Anspruch 1, wobei der Datensatz ferner ein oder mehr aus Wassertemperaturdaten und Wassertiefendaten ausgewählte Daten enthält.

3. System (1) zum Schätzen einer Fischart nach Anspruch 1 oder 2, wobei die gelernten Modelle unter Verwendung der Fischart und einer Fischmenge als Lehrerdaten erzeugt werden und
wobei das Schlussfolgerungsmodul (13) die Fischart und die Fischmenge des Fischbildes schätzt, das in den Echodaten enthalten ist.

4. System (1) zum Schätzen einer Fischart nach einem der Ansprüche 1 bis 3, ferner aufweisend ein Anzeigesteuerungsmodul (461), das dafür konfiguriert ist, ein Echobild basierend auf den Echodaten anzuzeigen,
wobei das Anzeigesteuerungsmodul (461) dem Echobild eine Markierung, die die durch das Schlussfolgerungsmodul (13) geschätzte Fischart angibt, hinzufügt, um mit dem im Echobild enthaltenen Fischbild assoziiert zu werden.

5. System (1) zum Schätzen einer Fischart nach einem der Ansprüche 1 bis 4, ferner aufweisend ein Benachrichtigungsmodul (49), das dafür konfiguriert ist, wenn die durch das Schlussfolgerungsmodul (13) geschätzte Fischart mit einer vorgegebenen Fischart übereinstimmt, einen Nutzer über die Fischart benachrichtigt.

6. Verfahren zum Schätzen einer Fischart, aufweisend:
Erfassen eines Datensatzes, der zumindest Positionsdaten und Echodaten enthält, die aus einer reflektierten Welle einer unter Wasser emittierten Ultraschallwelle erzeugt werden; und
Schätzen einer Fischart eines Fischbildes, das in den Echodaten des erfassten Datensatzes enthalten ist, indem ein gelerntes Modell verwendet wird, das durch maschinelles Lernen erzeugt wurde, wobei der Datensatz als Eingabedaten genutzt wird und die Fischart als Lehrerdaten genutzt wird,
**dadurch gekennzeichnet, dass** das Verfahren zum Schätzen einer Fischart ferner aufweist:
Unterscheiden der Fischart des Fischbildes, das in Bilddaten enthalten ist, die mittels einer Kamera erzeugt werden, die dafür konfiguriert ist, einen Fischfang abzubilden;
Erzeugen des gelernten Modells, indem die unterschiedenen Fischarten als Lehrerdaten verwendet werden; und
Assoziieren der Bilddaten mit dem Datensatz, wenn ein Abstand zwischen einer Position, wenn Zeichen eines Fisches basierend auf den Echodaten detektiert werden, und einer Position, bei der die Bilddaten erzeugt werden, unterhalb eines Schwellenwerts liegt,
wobei die Fischart des Fischbildes, das in den Bilddaten enthalten ist, unterschieden wird, indem ein weiteres gelerntes Modell, das durch maschinelles Lernen gelernt wurde, verwendet wird, wobei die Bilddaten als Eingabedaten genutzt werden und die Fischart als Lehrerdaten genutzt wird.

7. Programm zum Schätzen einer Fischart, durch das veranlasst wird, dass ein Computer arbeitet als:
Erfassungsmodul (15), das dafür konfiguriert ist, einen Datensatz zu erfassen, der zumindest Positionsdaten und Echodaten enthält, die aus einer reflektierten Welle einer unter Wasser emittierten Ultraschallwelle erzeugt werden;
Schlussfolgerungsmodul (13), das dafür konfiguriert ist, eine Fischart eines Fischbildes zu schätzen, das in den Echodaten des mittels des Erfassungsmoduls (15) erfassten Datensatzes enthalten ist, indem ein gelerntes Modell verwendet wird, das durch maschinelles Lernen erzeugt wurde, wobei der Datensatz als Eingabedaten genutzt wird und die Fischart als Lehrerdaten genutzt wird,
Unterscheidungsmodul (11), das dafür konfiguriert ist, die Fischart des Fischbildes zu unterscheiden, das in Bilddaten enthalten ist, die mittels einer Kamera erzeugt werden, die dafür konfiguriert ist, einen Fischfang abzubilden; und
Lernmodul (13), das dafür konfiguriert ist, das gelernte Modell zu erzeugen, indem die mittels des Unterscheidungsmoduls (11) unterschiedenen Fischarten als Lehrerdaten verwendet werden,
wobei das Unterscheidungsmodul (11) die Fischart des Fischbildes, das in den Bilddaten enthalten ist, unterscheidet, indem ein weiteres gelerntes Modell, das durch maschinelles Lernen gelernt wurde, verwendet wird, wobei die Bilddaten als Eingabedaten genutzt werden und die Fischart als Lehrerdaten genutzt wird, und
wobei das Erfassungsmodul (15) die Bilddaten mit dem Datensatz assoziiert, wenn ein Abstand zwischen einer Position, wenn Zeichen eines Fisches basierend auf den Echodaten detektiert werden, und einer Position, bei der die Bilddaten erzeugt werden, unterhalb eines Schwellenwerts liegt.

## Revendications

1. Système d'estimation d'espèce de poissons (1), comprenant :
un module d'acquisition (15) configuré pour acquérir un jeu de données comportant au moins des données de position et des données d'écho générées à partir d'une onde réfléchie d'une onde ultrasonore émise sous l'eau ; et
un module de raisonnement (13) configuré pour estimer une espèce de poissons d'une image de poissons incluse dans les données d'écho du jeu de données acquis par le module d'acquisition (15), en utilisant un modèle appris créé par apprentissage automatique où le jeu de données est utilisé en tant que données d'entrée et l'espèce de poissons est utilisée en tant que données d'enseignement, **caractérisé en ce que** le système d'estimation d'espèce de poissons (1) comprend en outre
un module de distinction (11) configuré pour distinguer l'espèce de poissons de l'image de poissons incluse dans des données d'image générées par un appareil de prise de vues configuré pour imager des poissons pêchés ; et
un module d'apprentissage (13) configuré pour créer le modèle appris en utilisant l'espèce de poissons distinguée par le module de distinction (11) en tant que données d'enseignement,
dans lequel le module de distinction (11) distingue l'espèce de poissons de l'image de poissons incluse dans les données d'image en utilisant un autre modèle appris créé par apprentissage automatique où le jeu de données est utilisé en tant que données d'entrée et l'espèce de poissons est utilisée en tant que données d'enseignement, et
dans lequel le module d'acquisition (15) associe les données d'image au jeu de données, lorsqu'une distance entre une position où des signes de poissons sont détectés sur la base des données d'écho et une position où les données d'image sont générées est inférieure à un seuil.

2. Système d'estimation d'espèce de poissons (1) selon la revendication 1, dans lequel le jeu de données comporte en outre un ou plusieurs éléments sélectionnés parmi des données de température et des données de profondeur d'eau.

3. Système d'estimation d'espèce de poissons (1) selon la revendication 1 ou 2, dans lequel les modèles appris sont créés en utilisant l'espèce de poissons et une quantité de poissons en tant que données d'enseignement, et
dans lequel le module de raisonnement (13) estime l'espèce de poissons et la quantité de poissons de l'image de poissons incluse dans les données d'écho.

4. Système d'estimation d'espèce de poissons (1) selon l'une des revendications 1 à 3, comprenant en outre un module de commande d'affichage (461) configuré pour afficher une image d'écho sur la base des données d'écho,
dans lequel le module de commande d'affichage (461) ajoute un repère indiquant l'espèce de poissons estimée par le module de raisonnement (13) sur l'image d'écho, de façon à ce qu'il soit associé à l'image de poissons incluse dans l'image d'écho.

5. Système d'estimation d'espèce de poissons (1) selon l'une des revendications 1 à 4, comprenant en outre un module de notification (49) configuré pour, lorsque l'espèce de poissons estimée par le module de raisonnement (13) correspond à une espèce de poissons préspécifiée, informer un utilisateur de l'espèce de poissons.

6. Procédé d'estimation d'une espèce de poissons, comprenant :
l'acquisition d'un jeu de données comportant au moins des données de position et des données d'écho générées à partir d'une onde réfléchie d'une onde ultrasonore émise sous l'eau ; et
l'estimation d'une espèce de poissons d'une image de poissons incluse dans les données d'écho du jeu de données acquis, en utilisant un modèle appris créé par apprentissage automatique où le jeu de données est utilisé en tant que données d'entrée et l'espèce de poissons est utilisée en tant que données d'enseignement, **caractérisé en ce que** le procédé d'estimation d'une espèce de poissons comprend en outre
la distinction de l'espèce de poissons de l'image de poissons incluse dans des données d'image générées par un appareil de prise de vues configuré pour imager des poissons pêchés ;
la création du modèle appris en utilisant l'espèce de poissons distinguée en tant que données d'enseignement ; et
l'association des données d'image au jeu de données, lorsqu'une distance entre une position où des signes de poissons sont détectés sur la base des données d'écho et une position où les données d'image sont générées est inférieure à un seuil,
dans lequel l'espèce de poissons de l'image de poissons incluse dans les données d'image est distinguée en utilisant un autre modèle appris créé par apprentissage automatique où le jeu de données est utilisé en tant que données d'entrée et l'espèce de poissons est utilisée en tant que données d'enseignement.

7. Programme d'estimation d'espèce de poissons au moyen duquel un ordinateur est amené à fonctionner comme
un module d'acquisition (15) configuré pour acquérir un jeu de données comportant au moins des données de position et des données d'écho générées à partir d'une onde réfléchie d'une onde ultrasonore émise sous l'eau ;
un module de raisonnement (13) configuré pour estimer une espèce de poissons d'une image de poissons incluse dans les données d'écho du jeu de données acquis par le module d'acquisition (15), en utilisant un modèle appris créé par apprentissage automatique où le jeu de données est utilisé en tant que données d'entrée et l'espèce de poissons est utilisée en tant que données d'enseignement,
un module de distinction (11) configuré pour distinguer l'espèce de poissons de l'image de poissons incluse dans des données d'image générées par un appareil de prise de vues configuré pour imager des poissons pêchés ; et
un module d'apprentissage (13) configuré pour créer le modèle appris en utilisant l'espèce de poissons distinguée par le module de distinction (11) en tant que données d'enseignement,
dans lequel le module de distinction (11) distingue l'espèce de poissons de l'image de poissons incluse dans les données d'image en utilisant un autre modèle appris créé par apprentissage automatique où le jeu de données est utilisé en tant que données d'entrée et l'espèce de poissons est utilisée en tant que données d'enseignement, et
dans lequel le module d'acquisition (15) associe les données d'image au jeu de données, lorsqu'une distance entre une position où des signes de poissons sont détectés sur la base des données d'écho et une position où les données d'image sont générées est inférieure à un seuil.
